Europäisches Patentamt

European Patent Office

Office européen des brevets

(11) Publication number: **0 273 074**
**A1**

## EUROPEAN PATENT APPLICATION

(21) Application number: **86310218.2**

(22) Date of filing: **30.12.86**

(51) Int. Cl.4: **G01N 9/14**

(43) Date of publication of application:
**06.07.88 Bulletin 88/27**

(84) Designated Contracting States:
**AT BE CH DE ES FR GB GR IT LI LU NL SE**

(71) Applicant: **Glennon, Barry J.**
**1371 Dogwood Drive**
**Conyers, GA 30207(US)**

Applicant: **Smith, Robert G.**
**1371 Dogwood Drive**
**Conyers, GA 30207(US)**

(72) Inventor: **Barber,Michael D**
**10169 Sunny Drive**
**Covington,Georgia 30209(US)**
Inventor: **Kipp,William G**
**195 Meadow Lane**
**Conyers,Georgia 30207(US)**

(74) Representative: **Jack, Bruce James et al**
**FORRESTER & BOEHMERT**
**Widenmayerstrasse 4/I**
**D-8000 Munchen 22(DE)**

(54) **Coolant line hydrometer.**

(57) A hydrometer unit permanently connected in an engine coolant line enables an immediate visual check on the adequacy of the anti-freeze constituent, such as ethylene glycol, in the system. The hydrometer includes a coolant receiving chamber having a transparent viewing window and a number of variously coloured float elements within the chamber provide an accurate indication of anti-freeze strength based on specific gravity. No manipulation of the hydrometer is required to enable a checking of the strength or weakness of the anti-freeze. In preferred embodiments means such as a vent valve or an internal venturi action vent tube serve to eliminate gas accumulation in the receiving chamber.

Fig.2.

## Coolant Line Hydrometer

The present invention relates to a simplified and reliable hydrometer unit for permanent installation directly in an engine coolant line, such as an automobile heater hose, whereby a direct visual indication of anti-freeze strength or weakness in the liquid coolant is obtainable at any time without the necessity for manipulating or even touching the hydrometer unit.

A coolant line hydrometer has been proposed in US-A-1 683 735, which discloses a hydrometer device comprising a windowed chamber adapted to be connected to a coolant line and housing a float hydrometer; the connection of the chamber to the coolant line includes a valve by means of which coolant may be admitted to the chamber to be tested therein, and the chamber has a drain valve by means of which the chamber may be emptied after a test. Thus, rather than giving a continuous reading of coolant density, this device provides for a specific test of density to be made when desired, by admitting a test sample of coolant to the chamber for the purpose of the test. US-A-3,626,763 discloses a device for the continuous testing of the specific gravity of a fluid - urine or polluted river water are cited as examples - flowing in a conduit in which is inserted a transparent chamber containing floatable elements of different densities so that the density of the fluid flowing through the chamber may be assessed by reference to the particular elements that float in the fluid at the time of observation. There is no suggesting that this device might be inserted in a coolant conduit of an engine for continuous assessment of coolant density. Moreover, as disclosed, this device is intended to be installed with its chamber vertical, the chamber having lateral inlet and outlet tubes near its upper and lower ends, respectively. Installation in the cooling system of an automobile engine would not be straightforward because of the non-alignment of the inlet and outlet tubes and, furthermore, installation with the inlet above the outlet, as disclosed, would in practice result in the accumulation of air and gas bubbles in the chamber and eventually, airlocking of the cooling system from this cause.

An objective of the present invention is therefore to provide a hydrometer device that may be readily installed in an engine coolant line, normally merely by cutting the line, and which will not only give a continuous visual indication of coolant density, but will function in an engine coolant environment for long periods without airlocking or other disadvantagious effects upon the performance of the engine cooling system in which it is installed.

The invention consists in the hydrometer devices defined in the appended claims.

Other features and advantages of the invention will become apparent during the course of the following description of certain embodiments, illustrated in the accompanying drawings, in which:

FIGURE 1 is a perspective view of a coolant line hydrometer according to one embodiment of the present invention;

FIGURE 2 is a vertical section taken through the assembled device shown in Figure 1 and depicting a variant of the invention;

FIGURE 3 is a side elevation, partly in section, showing a second embodiment of the invention;

FIGURE 4 is a further side elevation, partly in section, of the device according to Figure 1 and showing another variant of the invention;

FIGURE 5 is an exploded perspective view showing a further embodiment of the invention; and

FIGURE 6 is a vertical section taken through the assembled device shown in Figure 5.

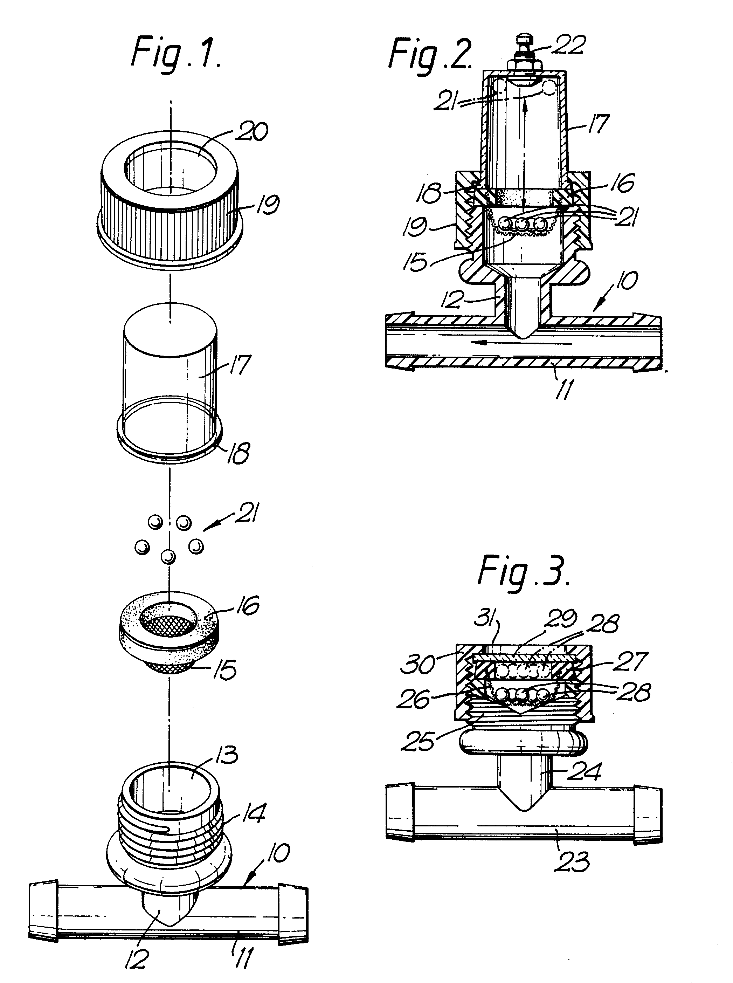

Referring to the drawings in detail wherein like numerals designate like parts, and referring first to Figures 1 and 2, a T-fitting 10 includes a main branch 11 adapted to be directly connected permanently in an engine coolant line, such as a heater hose of an automobile coolant system. The T-fitting includes a center lateral branch 12 which is positioned upright when the T-fitting is installed with suitable clamps, not shown, in a heater hose or the like. The short upright branch 12 carries an integral bowl 13 which is externally screw-threaded as at 14 and which is open at its top. A depressed screen element 15 having an upper end compressible gasket 16 is received within the chamber of the bowl 13, as shown in Figure 2, with the gasket 16 resting on the top horizontal edge of the bowl 13.

A clear viewing dome 17 has a bottom flange 18 resting on the gasket 16 and being clamped thereagainst by an internally threaded cap 19 which engages the external threads 14 of the bowl 13. The cap 19 has a top opening 20 through which the viewing dome 17 extends upwardly for a considerable distance above the top of the cap 19.

A plurality of variously coloured float balls 21, such as five float balls, is contained in the chamber defined by the viewing dome 17 and screen element 15. These coloured float balls are individually formulated to float in the liquid coolant at different concentrations of an anti-freeze constituent, such as ethylene glycol. As the anti-freeze concentrtion of the liquid coolent decreases over a period of time, the specific gravity of the coolant is diminished and the coloured float balls designed to float at a greater anti-freeze concentration do not float, but remain seated on the screen element 15, as shown in Figure 2. Those flat balls which are formulated to float at lesser coolant specific gravities will float and rise within the viewing dome 17 as shown in broken lines in Figure 2, to provide a direct visual indication of the strength of the anti-freeze in the coolant.

For example, if one coloured ball, say a green ball, rises in the dome 17 to the viewing position, the liquid coolant may resist freezing to -7°C (+20°F). If two balls, such as a green and red ball, rise in the dome 17, the coolant may resist freezing to -15°C (+5°F). If three balls rise in the dome 17, such as green, red and white balls, the coolant may resist freezing to -23°C (-10°F). If four balls, green, red, white and yellow, rise in the viewing dome 17, the coolant may resist freezing to -34°C (-30°"F). Finally, if five balls, green, red, white, yellow and blue, rise in the dome 17, the anti-freeze protection may be good down to -46°C (-50°F).

It should be understood that the invention is not restricted to the use of any particular number of float balls 21, five such balls representing a preferred arrangement, nor is the invention restricted to the use of coloured balls. Balls of a single colour can be utilised, if desired, in which case the number of balls rising into the dome 17 will indicate the strength of the anti-freeze.

In the example previously given for five variously coloured float balls 21, it will be understood that if no ball rises into the viewing dome 17 the anti-freeze is well below acceptable levels in colder climates.

Figure 2 includes a variant of the invention comprising an air release valve 22 installed on the top wall of the dome 17, and serving to discharge any air which might be trapped in the top of the dome.

Figure 3 depicts a second embodiment of the invention comprising a T-fitting 23 adapted for connection more-or-less permanently in a coolant hose and having an upright extension 24 carrying an open top externally screw-threaded bowl 25 receiving therein a screen element 26 having an upper end gasket 27. A plurality of float elements 28 are provided, such as the previously described variously coloured float balls.

In lieu of the clear viewing dome 17, a clear flat viewing disc or lens 29 is utilized and rests on the gasket 27, and is clamped in place by an internally threaded cap 30 which engages the threads of the bowl 25. The cap 30 has a top opening 31 adjacent to the lens 29. If the cap 30 is formed of transparent material and is provided with a transparent top wall, the lens 29 can be omitted and the floating indicator balls in the hydrometer can be viewed through the top wall of the cap as they float to indicating positions against or near such wall.

The general operation of the device according to Figure 3 is the same as described for the first embodiment of the invention shown in Figures 1 and 2.

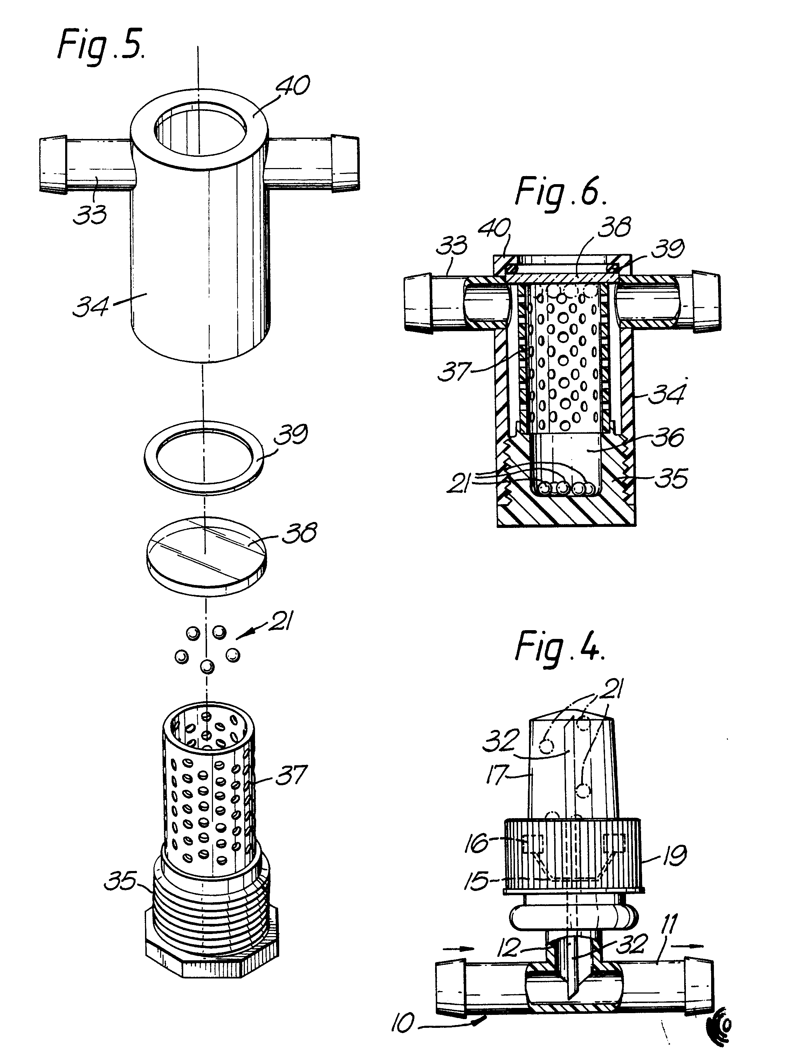

Figure 4 shows another variant of the invention in Figures 1 and 2 in which the air release valve 22 is omitted and replaced by an internal vent tube 32 which places the top of the dome 17 in direct communication with the interior of the T-fitting branch 11. The lower end of the tube 32 may conveniently face downstream of the coolant flow within the T-fitting, as shown, to enhance the venturi action caused by the coolant flow through the fitting and that results in any air tending to collect in the top of viewing dome 17 being drawn through the vent tube 32 to enter the main coolant flow through the T-fitting 10. All other parts of the device in Figure 4 are identical to corresponding parts shown in Figures 1 and 2, and the basic mode of operation of the invention is exactly as described in connection with Figures 1 and 2.

Figures 5 and 6 show another embodiment of the invention which differs from all of the previous embodiments in that the chamber or reservoir containing the float balls is located below the coolant flow path rather than above it. This eliminates the need for the air release valve 22 or a vent tube 32.

In Figures 5 and 6, a tubular coolant fitting 33 is connected directly in a coolant hose or line. The fitting 33 carries a sleeve 34 which extends vertically below the fitting 33 and is internally threaded at its lower end portion to receive an externally threaded cap 35 defining a bowl chamber 36 adapted to contain the float balls 21. A perforated sleeve 37 extends from the upper end of the cap 35 and is interengaged therewith as shown in Figure 6. A clear viewing lens 38 extends across and engages the top edge of the perforated sleeve 37 and an elastic ring seal 39 is placed between the lens and the top wall 40 of sleeve 34.

When the cap 35 is adequately tightened, the parts are held securely in assembled relationship. Liquid coolant flowing in the fitting 33 can descend into and fill the space surrounding and within the perforated sleeve 37 and also the bowl chamber 36. The indicator float balls 21 can float and rise through the sleeve 37 and place themselves against the lens 38 to provide a visual indication of anti-freeze concentration in the same manner described previously for the preceding embodiments of the invention. A stated, the construction according to Figures 5 and 6 has the advantage of eliminating possible trapping of air in the top of the hydrometer. All embodiments of the invention, however, provide a permanently installed coolant line direct reading hydrometer which requires no mechanical manipulation in order to get an accurate visual indication of anti-freeze strength at any time this is desired.

Coolant can be drained from the system through the hydrometer assembly as by removing the dome 17 and cap 19 and fresh anti-freeze can be added to the system through the hydrometer. Similarly, the system can be flushed by attaching a garden hose to the threads 14 after removal of the cap 19 and by opening the drain near the bottom of the radiator.

It is to be understood that the forms of the invention herewith shown and described are to be taken as preferred examples of the same, and that various changes in the shape, size and arrangement of parts may be made.

The features disclosed in the foregoing description, in the following claims and/or in the accompanying drawings may, both separatately and in any combination thereof, be material for realising the invention in diverse forms thereof.

## Claims

1. A coolant line hydrometer comprising a tubular fitting adapted for connection in a coolant flow line; a coolant receiving chamber having open connection to said fitting for continuous sampling of coolant flowing through said fitting; a plurality of indicating float elements in said chamber and adapted to rise individually to indicating positions in a coolant sample therein as a function of the specific gravity of such coolant sample; means retaining said float elements in said chamber; and viewing window means through which said float elements can be observed in their said indicating positions in said chamber.

2. A coolant line hydrometer according to claim 1, wherein said coolant receiving chamber is disposed above said fitting and is providedf with gas elimintor means for eliminating entrapped gas therein.

3. A coolant line hydrometer according to claim 2, wherein said gas eliminator means comprises a vent valve.

4. A coolant line hydrometer according to claim 2, wherein said gas eliminator means comprises an internal vent tube extending within said chamber and having an inlet opening near the top of the chamber and an outlet opening positioned to be within the coolant flow through the fitting for extraction of gas through said vent tube by venturi action.

5. A coolant line hydrometer according to claim 4, wherein the outlet opening of the vent tube is positioned to face downstream within the coolant flow path through the fitting.

6. A coolant line hydrometer according to any one of claim 1 to 5, wherein said viewing window means comprises a substantially clear viewing dome.

7. A coolant line hydrometer according to any one of claims 1 to 5, wherein said viewing window means comprises a substantially flat viewing lens disposed at the top of said coolant receiving chamber.

8. A coolant line hydrometer according to claim 1, wherein said coolant receiving chamber is disposed to extend below the coolant flow path defined by said fitting and said viewing window means comprises a substantially clear viewing lens disposed at the top of said chamber adjacent said fitting.

9. A coolant line hydrometer according to claim 8, wherein said coolant receiving chamber comprises a sleeve extending at right angles to said fitting, a closure cap at the lower end of said sleeve and defining a seating chamber for said indicating float elements, and a perforated sleeve within said sleeve in spaced substantially concentric relationship therewith and extending from said closure cap, through said fitting, to said viewing lens to retain the float elements in said chamber.

10. A coolant line hydrometer according to any preceding claim, wherein said indicating float elements comprise float balls of individually different densities and colours.

Fig.1.

Fig.2.

Fig.3.

Fig.5.

Fig.6.

Fig.4.

| | European Patent Office | EUROPEAN SEARCH REPORT | Application number |

**EUROPEAN SEARCH REPORT**

Application number

EP 86 31 0218

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-1 547 005 (G.A. SMITH)<br>* page 1, lines 8-27, 75-83 *<br>--- | 1 | G 01 N 9/14 |
| A,D | US-A-1 683 735 (G.A. SMITH)<br>* page 1, lines 1-15 *<br>--- | 1 | |
| A | US-A-1 632 259 (R.E. WILSON et al.)<br>* page 1, lines 81-105 *<br>--- | 1 | |
| A,D | US-A-3 626 763 (F.K. WHITE)<br>* abstract *<br>--- | 1 | |
| A | US-A-1 567 821 (E.J. SWEETLAND)<br>* page 1, lines 9-27, 72-81; claim 1 *<br>--- | 1 | TECHNICAL FIELDS SEARCHED (Int. Cl.4) |
| E | US-A-4 649 747 (M.D. BARBER et al.)<br>* whole document *<br>----- | 1-10 | G 01 N 9/00<br>F 01 P 11/00 |

The present search report has been drawn up for all claims

| Place of search | Date of completion of the search | Examiner |
|---|---|---|
| BERLIN | 25-08-1987 | BRISON O.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82